# EUROPEAN PATENT APPLICATION

(11) **EP 1 816 834 A1**
(43) Date of publication of application: **08.08.2007**
(21) Application number: 06002072.4
(22) Date of filing: 01.02.2006
(51) Int. Cl.: H04M 1/656

(54) **Mobile phone with automatic recording of conversations**

(71) Applicant: Sun, Wen-Hua, Nankang Dist Taipei 115 (KR)
(72) Inventor: Sun, Wen-Hua, Nankang Dist Taipei 115 (KR)
(74) Representative: Wiebusch, Manfred

(57) **Abstract**

A mobile phone handset with built-in automatic voice recorder. The voice recorder is a digital voice recording device using a solid state nonvolatile memory as a storage medium. The voice recorder is controlled by a controller for activating and stopping voice recording. The controller automatically activates the voice recorder for voice recording without manual operation at a time a conversation starts. The controller automatically stops the voice recorder without manual operation at a time the conversation finishes. The voice record item includes information such as conversation beginning time, conversation duration and telephone number of another party for future review and reference.

## Description

### BACKGROUND OF THE INVENTION

### 1. Field of the Invention

The present invention relates to a mobile phone. More particularly, it concerns a mobile phone with recording function.

### 2. Description of Prior Art

Mobile phones have become the important tools of communication. In the past, communication was always made at fixed location through fixed network telephones. However, it has been changed into communication at unfixed locations through mobile phones. Spatial limitation of communication has been broken by mobile phones. With the maturity and popularity of mobile communication networks and mobile phones, the conversation quality and additional functions of the mobile phone always keep increasing, however, the costs of phone calling have been low enough to be comparable with fixed telephone, even cheaper. The mobile phone is being used much more frequently than the fixed telephone. There are many people that even use mobile phone as their only communicative tool. Now it can be said that people's dependence upon the mobile phone has exceeded the fixed telephone.

The mobile phones have the advantage of communication everywhere. However, some conventional recording medium such as paper and pen may not be available at a place where the user uses mobile phones. Therefore, mobile phones with voice recording ability are provided to record voice message during conversation. For example, U.S. Pat. No. 5740543, No. 5867793 and No. 5995824 disclosed mobile phones with voice recording ability, wherein the conversation in phone call is recorded and user can rehear the voice message after finishing the phone call. However, user needs to manually operate some record button to record voice message during conversation when using such conventional mobile phones with voice recording ability. For commercial or professional users needing to record each phone call, it is troublesome. The user may forget to operate the record button or press wrong button. Moreover, the beginning part of a phone call is important to identify the calling party or the called party. For example, the uncertainty in the identification of calling party or the called party is essential when the recorded voice message is used for legal or potentially legal evidence.

### SUMMARY OF THE INVENTION

The present invention is to provide a mobile phone with automatic recording function. The mobile phone with automatic recording function can automatically record a conversation when the conversation is started. Therefore, no voice information will be lost.

Accordingly, the present invention provides a mobile phone with automatic recording function, which includes a voice recorder realized by a digital voice recording device. The voice recorder is controlled by a controller for activating and stopping voice recording. The controller automatically activates the voice recorder for voice recording without manual operation when a conversation is started. The controller automatically stops the voice recorder without manual operation when the conversation is finished. The voice record item comprises information such as conversation beginning time, conversation duration and telephone number of another party for future review and reference.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows the block diagram of the mobile phone with automatic recording function according to a preferred embodiment of the present invention.
Fig. 2 shows a flowchart for operating the mobile phone with automatic recording function according to a preferred embodiment of the present invention.

### DETAILED DESCRIPTION OF THE INVENTION

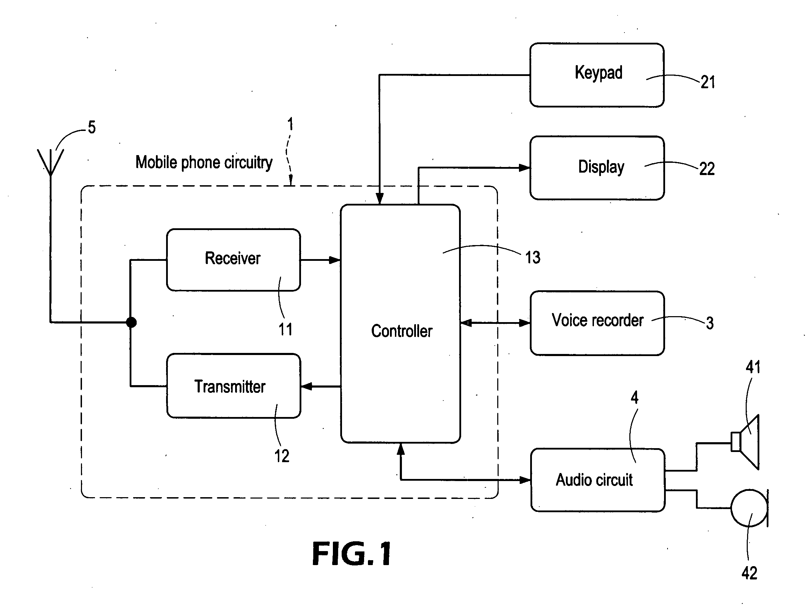

Fig. 1 shows the block diagram of the mobile phone with automatic recording function according to a preferred embodiment of the present invention. The mobile phone has a mobile phone circuitry 1, which comprises a receiver 11, a transmitter 12 and a controller 13. The receiver 11 receives an RF signal emitted from a base station (not shown) through an antenna 5. The RF signal is demodulated by the receiver 11 and then sent to the controller 13 for signal processing. The transmitter 12 modulates a signal sent from the controller 13 and then sends the modulated signal to the base station through the antenna 5. The controller 13 is the console for the whole mobile phone circuitry 1 and controls other peripheral circuits. The controller 13 is connected to a keypad 21 for user input and a display 22 for displaying the status and message of the mobile phone circuitry 1. The controller 13 is also connected to an audio circuit 4 for processing an audio signal input from the microphone 42 and processing the audio signal before sending to a loudspeaker 41. The loudspeaker 41 and the microphone 42 are used as earpiece and mouthpiece for the mobile phone circuitry 1, respectively.

A voice recorder 3 is connected to the controller 13 and controlled by the controller 13. The voice recorder 3 is a digital voice recording device and can use solid state nonvolatile memory for a storage medium. The solid state nonvolatile memory, for example, can be flash memory or electrically erasable programmable read only memory (EEPROM). The controller 13 executes phone call receiving and making through the receiver 11 and the transmitter 12. At the beginning of a conversation through the mobile phone circuitry 1, the controller 13 will automatically activate the voice recorder 3 for voice recording without manual operation. When the phone call is finished, the controller 13 will automatically stop the voice recorder 3 without manual operation. Therefore, entire bilateral conversation, including user and another party, can be automatically recorded into a voice record item. Preferably each voice record item also comprises information such as conversation beginning time, conversation duration and telephone number of another party for future review. In other words, the voice recorder 3 can be automatically activated for voice recording without manual operation, no matter the user is calling party or called party.

The inquiry and review of the voice record item can be selected through the keypad 21 and the display 22. The selection index can be the conversation beginning time or the telephone number of another party. When the user has selected a voice record item for review, the controller 13 reads the selected voice record item from the voice recorder 3 and then sends the selected voice record item to the audio circuit 4 and the loudspeaker 41 for playback. It should be known for person having ordinary skill in the art that the voice record item stored in the voice recorder 3 can be sent to another external storage medium through an interface of the mobile phone. Alternatively, the voice record item stored in the voice recorder 3 can be playbacked through an external loudspeaker.

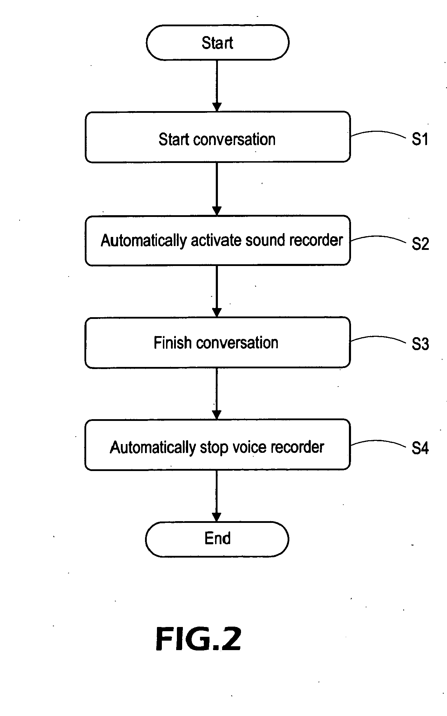

Fig. 2 shows a flowchart for operating the mobile phone with automatic recording function according to a preferred embodiment of the present invention. When the user uses the mobile phone circuitry 1 with automatic recording function for making a phone call or receiving a phone call in step S1, the voice recorder 3 is automatically activated for voice recording in step S2. When the conversation is finished in step S3, the voice recorder 3 is automatically stopped for ending voice recording in step S4. Therefore the conversation message for bilateral parties can be automatically recorded without involving manual operation.

## Claims

1. A mobile phone with automatic recording function comprising a mobile phone circuit (1) capable of bidirectional communication with a mobile communication network, said mobile phone circuitry (1) comprising a receiver (11) receiving a wireless signal from said mobile communication network, a transmitter (12) sending a wireless signal to the mobile communication network, a controller (13) electrically connected to said receiver (11) and said transmitter (12) and controlling operation of said transmitter (12) and said receiver (11), and a voice recorder (3) electrically connected to said controller (13), **characterised in that** said controller (13) automatically activates the voice recorder (3) for recording voice into a voice record item at a time a conversation through the mobile phone starts;
the controller (13) automatically stops the voice recorder (3) at a time the conversation through the mobile phone finishes.

2. The mobile phone as in claim 1, **characterised in that** said voice recorder (3) is a digital voice recording device.

3. The mobile phone as in claim 2, **characterised in that** said voice recorder (3) uses a solid state nonvolatile memory as a storage medium.

4. The mobile phone as in claim 3, **characterised in that** the storage medium is a flash memory.

5. The mobile phone as in claim 3, **characterised in that** the storage medium is an EEPROM.

6. The mobile phone as in claim 1, **characterised in that** said voice record item comprises at least one of conversation beginning time, conversation duration and telephone number.

7. A method for automatically recording voice for a mobile phone, the mobile phone comprising a voice recorder, said method comprising:
automatically activating the voice recorder (3) for recording a conversation into a voice record item at a time the conversation through the mobile phone starts; and
automatically stopping the voice recorder (3) at a time the conversation through the mobile phone finishes.

8. The method as in claim 7, **characterised in that** the voice record item comprises at least one of conversation beginning time, conversation duration and telephone number.
